# EUROPÄISCHE PATENTSCHRIFT

(11) **EP 0 926 803 B1**
(45) Veröffentlichungstag und Bekanntmachung des Hinweises auf die Patenterteilung: **29.09.2004**
(21) Anmeldenummer: 98113652.6
(22) Anmeldetag: 22.07.1998
(51) Int. Cl.: H02K 5/24

(54) **Anordnung zur schwingungsisolierenden Halterung eines Elektromotors**
Device for vibration-isolating mount of a motor
Dispositif de fixation d'un moteur avec élément de support isolant des vibrations

(30) Priorität: 24.12.1997 DE 29722852 U
(43) Veröffentlichungstag der Anmeldung: 30.06.1999
(73) Patentinhaber: ebm-papst Mulfingen GmbH & Co.KG, 74673 Mulfingen (DE)
(72) Erfinder: Bertolini, Thomas Dr.-Ing., 77866 Rheinau (DE); Schöne, Jürgen Dr.-Ing., 97980 Bad Mergentheim (DE); Streng, Gunter Dipl.-Ing. (FH), 74575 Schrozberg (DE); Baer, Martin Dipl.-Ing. (FH), 74673 Mulfingen (DE)
(74) Vertreter: Patentanwälte Dr. Solf & Zapf

(56) Entgegenhaltungen:
- DE-A- 3 823 447
- FR-A- 2 049 307
- US-A- 4 161 667
- US-A- 4 161 812

## Beschreibung

Die vorliegende Erfindung betrifft eine Anordnung zur schwingungsisolierenden Halterung eines Elektromotors an einem Trägerteil über ein im wesentlichen scheibenförmiges Trägerelement, wobei das Trägerelement zwei Halteabschnitte, und zwar einen Motor-Halteabschnitt zum Verbinden mit dem Elektromotor und einen Träger-Halteabschnitt zum Verbinden mit dem Trägerteil aufweist, und wobei die beiden Halteabschnitte über elastische, stegartige Verbindungsstücke verbunden sind.

Eine derartige Motorhalterung ist aus der DE-OS 2 219 182 bekannt. Sie soll zur Reduzierung von Tangential- und Radialschwingungen dienen. Dabei ist ein Trägerelement, dort Stützglied genannt, vorgesehen, das aus einem äußeren, gehäuseseitigen Ring, einem inneren, mit dem Motor verbundenen Ring und aus die beiden Ringe einstückig verbindenden, im wesentlichen radialen, elastischen Stegen besteht. Zusätzlich ist ein gesondertes Widerlager in Form eines Ringelementes vorgesehen, das axial auf das Trägerelement aufgesetzt wird. Das Widerlagerteil besitzt Anschlagstege mit Begrenzungsflächen derart, daß im Zusammenwirken mit am Innenring des Trägerelementes vorgesehenen Anschlägen eine Begrenzung der tangentialen und radialen Schwingbewegungen des Motors gewährleistet ist. Eine axiale Bewegungsbegrenzung ist jedoch nicht vorgesehen. Diese bekannte Anordnung eignet sich nur zur Halterung von relativ kleinen, leichtgewichtigen Elektromotoren, wie sie z.B. in Büromaschinen Verwendung finden.

Die DE-PS 38 23 447 beschreibt ein elektromotorisch betriebenes Gebläse mit einer ganz ähnlichen Halterung. Innerhalb eines Gebläsegehäuses ist zur Geräuschentkopplung ein quer zur Gebläsedrehachse angeordnetes, scheibenförmiges Bauelement vorgesehen, dessen Außenbereich an der Innenfläche des Gehäuses gehalten ist, und mit dessen zentralem Bereich das Gebläse, d.h. der Motor mit einem Lüfterrad, verbunden ist. Dabei ist der Außenbereich mit dem zentralen Bereich über mehrere elastische Stege einstückig verbunden. Jedoch ist hierbei (nur) ein axialer Anschlag direkt zwischen dem Gebläse und dem Gehäuse vorgesehen, indem das Gebläse zwei in Richtung der Gebläsedrehachse voneinander weg weisende Schultern aufweist, denen mit Abstand Gegenschultern des Gehäuses zugeordnet sind. Die elastischen Stege haben einen solchen - z.B. spiralförmigen oder S-förmigen - Verlauf, daß ihre inneren und äußeren Anbindungsstellen am zentralen Bereich und am Außenbereich jeweils in Umfangsrichtung gegeneinander um einen bestimmten Winkel a versetzt sind. Diese bekannte Anordnung ist ebenfalls nur für relativ kleine Gebläse vorgesehen, wie sie in Kraftfahrzeugen zur sensorischen Temperaturerfassung im Zusammenhang mit der Regelung einer Klimaanlage verwendet werden.

Eine weitere solche Anordnung ist schließlich aus dem DE-GM 91 00 952 bekannt. Auch dabei handelt es sich speziell um einen sogenannten Sensor-Ventilator für den Einsatz zur Regelung einer Klimaanlage in einem Kraftfahrzeug. Zudem ist auch hier nur ein axialer Anschlag vorgesehen, und zwar direkt zwischen einem Gehäusedeckel und den elastischen Stegen der Trägerscheibe.

FR-A-2.049.307 offenbart eine "Anordnung zur schwingungsisolierenden Halterung eines Elektromotors an einem Trägerteil", wobei auch das Teilmerkmal von dreidimensionalen elastischen Relativbewegungen sowie von "Anschlagmitteln zur dreidimensionalen Begrenzung der elastischen Relativbewegungen" als bekannt anzusehen ist. Dabei wird ein Motor über mehrere (vier) einzelne Federelemente innerhalb eines Gehäuses aufgehängt, indem die Federelemente direkt, d. h. ohne zusätzliche befestigbare Halteabschnitte, zwischen Gehäuse und Motor montiert wenden müssen. Dies führt zu einer komplizierten Montage, weil die einzelnen Federelemente direkt zwischen Motor und Gehäuse montiert werden müssen.

DE-A-2,219,182 und DE-A-3,823,447 offenbaren ausdrücklich **einteilige** Trägerelemente.

US-A-4,161,812, FR-A-2,049,307 und US-A-4,161,667 beschreiben jeweils, eine Motor-Halterung ohne scheibenförmiges Trägerelement, wobei der Motor über einzelne, dezentrale, über den Umfang verteilte Halteteile aufgehängt wird.

Der vorliegenden Erfindung liegt die Aufgabe zugrunde, ausgehend von dem beschriebenen Stand der Technik eine Anordnung der gattungsgemäßen Art zu schaffen, die auch bei relativ großen und schwergewichtigen Elektromotoren, wie sie beispielsweise in Gebläsen von Heizungsanlagen (Brennergebläsen) Verwendung finden, eine effektive Schwingungsisolierung gewährleistet.

Die Aufgabe wird erfindungsgemäß mit der Merkmalskombination des unabhängigen Anspruchs gelöst. Bevorzugte Ausgestaltungen sind in den abhängigen Ansprüchen definiert.

Ausgehend von einer gattungsgemäßen Anordnung ist die erfindungsgemäße Anordnung dadurch gekennzeichnet, daß die beiden Halteabschnitte (24, 26) und die Verbindungsstücke (28) von ursprünglich separaten Einzelteilen gebildet sind, wobei die Verbindungsstücke (28) über kraft- und/oder formschlüssige Verbindungen einerseits im radial äußeren Bereich mit dem einen Halteabschnitt (26) sowie andererseits im radial inneren Bereich mit dem anderen Halteabschnitt (24) verbunden sind und wobei die Verbindungsstücke (28) derart ausgelegt sind, dass die beiden Hafteabschnftte (24, 26) dreidimensional, in allen Raumrichtungen, und zwar axial, radial und tangential, über einen bestimmten Bewegungsspielraum hinweg relativ zueinander elastisch beweglich sind, wobei das Trägerelement (12) integrierte Anschlagmittel (30) zur dreidimensionalen Begrenzung der elastischen Relativbewegungen der Halteabschnitte (24, 26) aufweist.

Auch bei großen und schweren Motoren, die gegebenenfalls mit einem angetriebenen Teil, beispielsweise einem Lüfterrad, eine Einheit bilden, wird sicher vermieden, daß es zu direkten Anschlägen zwischen Motor- und Gehäuseteilen kommt, so daß auch daraus eventuell resultierende Unwuchtverschiebungen praktisch ausgeschlossen sind. Die Anschlagmittel wirken einerseits im Betriebszustand, wenn es z.B. zu Relativbewegungen aufgrund von plötzlichen Drehzahländerungen kommt. Andererseits wird auch eine effektive Transportsicherung erreicht, indem auch bei abrupten Bewegungen des gesamten jeweiligen Gerätes, beispielsweise eines Lüfters, alle Relativbewegungen sehr schonend über die Anschlagmittel des Trägerelementes abgefangen werden.

Die beiden Halteabschnitte und die Verbindungsstücke als ursprünglich separate Einzelteile werden miteinander auf geeignete Weise verbunden, und zwar im radial äußeren Bereich mit dem Träger-Halteabschnitt sowie im radial inneren Bereich mit dem Motor-Halteabschnitt, und zwar über kraft- und/oder formschlüssige Verbindungen. Grundsätzlich kann aber auch eine umgekehrte Anordnung der Verbindungsstücke vorgesehen sein, d.h. sie können außen mit dem Motor-Halteabschnitt und innen mit dem Träger-Halteabschnitt verbunden sein. Aufgrund der ursprünglich separaten Einzelteile ergibt sich die vorteilhafte Möglichkeit, die Halteabschnitte und die Verbindungsstücke aus verschiedenen Materialien herzustellen. Besonders zweckmäßig ist es, die Halteabschnitte aus einem bestimmten Kunststoffmaterial und dabei die Verbindungsstücke insbesondere aus Metall (Federstahlblech) herzustellen. Dadurch können besonders hohe Massen und Reaktionskräfte abgestützt werden. Ferner kann durch einfaches Austauschen bzw. einfache Auswahl der jeweils entsprechend unterschiedlich ausgelegten Verbindungsstücke eine schnelle Anpassung an unterschiedliche Erfordernisse beim jeweiligen Anwendungsfall vorgenommen werden.

Das Trägerelement wird axial zwischen dem - von einer im wesentlichen ebenen Gehäusewandung eines Lüfters gebildeten - Trägerteil und dem Elektromotor angeordnet, wobei der Elektromotor zum Antrieb eines Lüfterrades dient. Eine Motorwelle erstreckt sich hierbei zentrisch durch das Trägerelement und durch eine Öffnung der Lüfter-Gehäusewandung hindurch und ist innerhalb des Lüftergehäuses mit dem Lüfterrad verbunden. Hierbei ist folglich der Träger-Halteabschnitt auf seiner von dem Elektromotor axial abgekehrten Seite mit dem Trägerteil verbunden, während der Motor-Halteabschnitt auf seiner von dem Trägerteil axial abgekehrten Seite mit dem Elektromotor verbunden ist. Die beiden Halteabschnitte besitzen hierzu jeweils scheibenförmige Wandungsabschnitte, die voneinander axial beabstandet sind. Somit handelt es sich bei dem Trägerelement im Grunde um eine Doppelscheibe, wobei die Verbindungsstücke axial dazwischen angeordnet sind. Die Halteabschnitte haben hierzu radial innen bzw. außen sich axial erstreckende und in radialer Richtung überlappende Abschnitte, zwischen denen sich die Verbindungsstücke erstrecken. Auf diese Weise bilden die Halteabschnitte praktisch ein die Verbindungsstücke axial und radial umschließendes Aufnahmegehäuse. Dabei ist vorgesehen, daß zur Bildung der Anschlagmittel die beiden Halteabschnitte bereichsweise radial bzw. axial mit entsprechendem Bewegungsspielraum ineinandergreifen.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1: als Anwendungsbeispiel einen Axialschnitt durch ein Radialgebläse mit einer erfindungsgemäßen Anordnung zur schwingungsisolierenden Halterung eines Elektromotors an einer als Trägerteil fungierenden Gehäusewandung des Lüftergehäuses,
- Fig. 2: eine gesonderte Darstellung des erfindungsgemäßen Trägerelements in einer Schnittdarstellung analog zu Fig. 1,
- Fig. 3: eine axiale Stirnansicht in Pfeilrichtung III gemäß Fig. 2,
- Fig. 4: eine Ansicht auf die gegenüberliegende Stirnseite in Pfeilrichtung IV gemäß Fig. 2,
- Fig. 5: einen axialen Querschnitt in der Schnittebene V-V gemäß Fig. 3,
- Fig. 6 und 7: Perspektivansichten der beiden Halteabschnitte des erfindungsgemäßen Trägerelements vor dem Zusammenfügen,
- Fig. 8 und 9: entsprechende Perspektivansichten ähnlich Fig. 6 und 7, jedoch auf die jeweils andere Seite der Halteabschnitte,
- Fig. 10: eine vergrößerte Einzelheit im Bereich X gemäß Fig. 6,
- Fig. 11: eine Perspektivdarstellung eines federelastischen Verbindungsstückes in einer ersten Ausführungsform,
- Fig. 12: eine zweite mögliche Ausführungsform eines elastischen Verbindungsstückes,
- Fig. 13: eine Teil-Perspektivansicht des erfindungsgemäßen Trägerelementes,
- Fig. 14: eine weitere Detaildarstellung des erfindungsgemäßen Trägerelementes,
- Fig. 15: eine Perspektivansicht einer Wellendichtung in einer gegenüber Fig. 1 alternativen Ausgestaltung,
- Fig. 16: eine Darstellung analog zu Fig. 1 mit einer vorteilhaften Ausführungsvariante der erfindungsgemäßen, schwingungsisolierenden Anordnung und
- Fig. 17 und 18: Perspektivansichten des Motor-Halteabschnittes des Trägerelementes in der Ausführung nach Fig. 16.

In den verschiedenen Figuren der Zeichnung sind gleiche Teile stets mit den gleichen Bezugszeichen versehen und werden daher in der Regel jeweils nur einmal beschrieben.

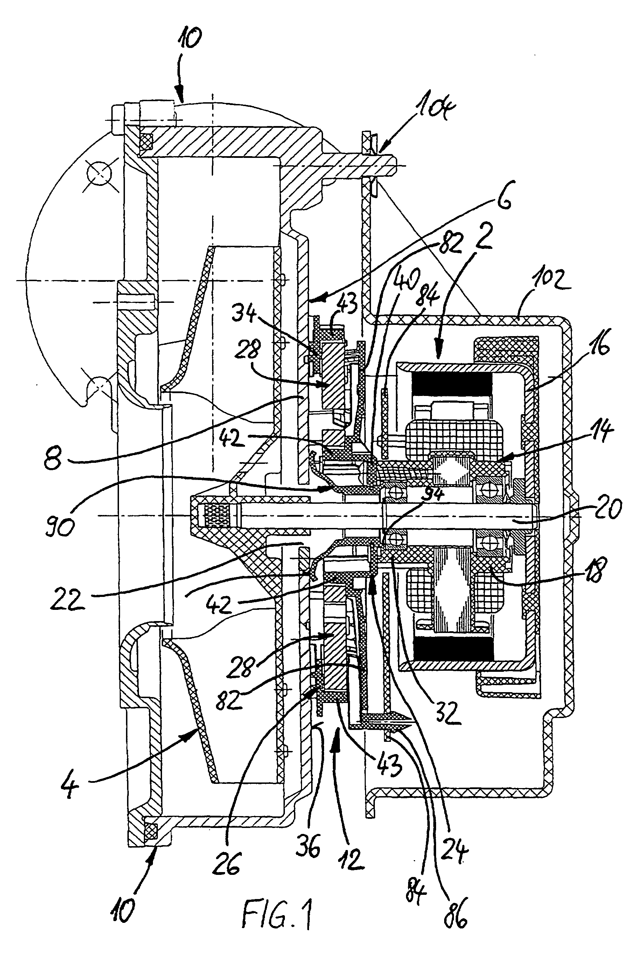

Bei dem in Fig. 1 veranschaulichten, bevorzugten Anwendungsbeispiel ist ein Elektromotor 2 zum Antrieb eines Lüfterrades 4 vorgesehen und hierzu an einer als Trägerteil 6 fungierenden Gehäusewandung 8 eines Lüfters 10 (hier als Radialgebläse ausgebildet) gehaltert, und zwar über ein im wesentlichen scheibenförmiges Trägerelement 12. Der Elektromotor 2 ist als Außenläufermotor ausgebildet, wobei ein Stator 14 von einem Außenläufer 16 umschlossen ist. Der Außenläufer 16 ist über eine innerhalb eines Lagertragrohrs 18 des Stators 14 drehbar gelagerte Motorwelle 20 mit dem Lüfterrad 4 drehfest verbunden, so daß der Elektromotor 2 mit dem Lüfterrad 4 praktisch eine Einheit bildet, die über das Trägerelement 12 an der Gehäusewandung 8 befestigt ist. Dabei erstreckt sich Motorwelle 20 durch eine zentrische Öffnung 22 der Gehäusewandung 8 in das Gehäuse des Lüfters 10 hinein.

Hierbei ist nun das Trägerelement 12 axial zwischen dem Elektromotor 2 und dem Trägerteil 6 bzw. der Gehäusewandung 8 des Lüfters 10 angeordnet. Das Trägerelement 12 weist einen mit dem Elektromotor 2 verbundenen Motor-Halteabschnitt 24 sowie einen mit dem Trägerteil 6 verbundenen bzw. flächig auf der im wesentlichen ebenen Gehäusewandung 8 gehalterten Träger-Halteabschnitt 26 auf. Die beiden Halteabschnitte 24,26 sind über elastische, stegartige Verbindungsstücke 28 miteinander verbunden. Dabei sind diese Verbindungsstücke 28 derart ausgelegt, daß die beiden Halteabschnitte 24,26 - und über diese somit auch der Elektromotor 2 und das Trägerteil 6 - dreidimensional, d.h. in allen Raumrichtungen, und zwar axial, radial und tangential, jeweils über einen bestimmten Bewegungsspielraum hinweg relativ zueinander elastisch beweglich sind. Es ist ferner vorgesehen, daß dabei das Trägerelement 12 integrierte Anschlagmittel 30 zur dreidimensionalen Begrenzung von allen durch die Erfindung möglichen elastischen Relativbewegungen der Halteabschnitte 24, 26 aufweist. Diese Anschlagmittel 30 werden im folgenden insbesondere anhand der Fig. 13 und 14 noch genauer erläutert werden.

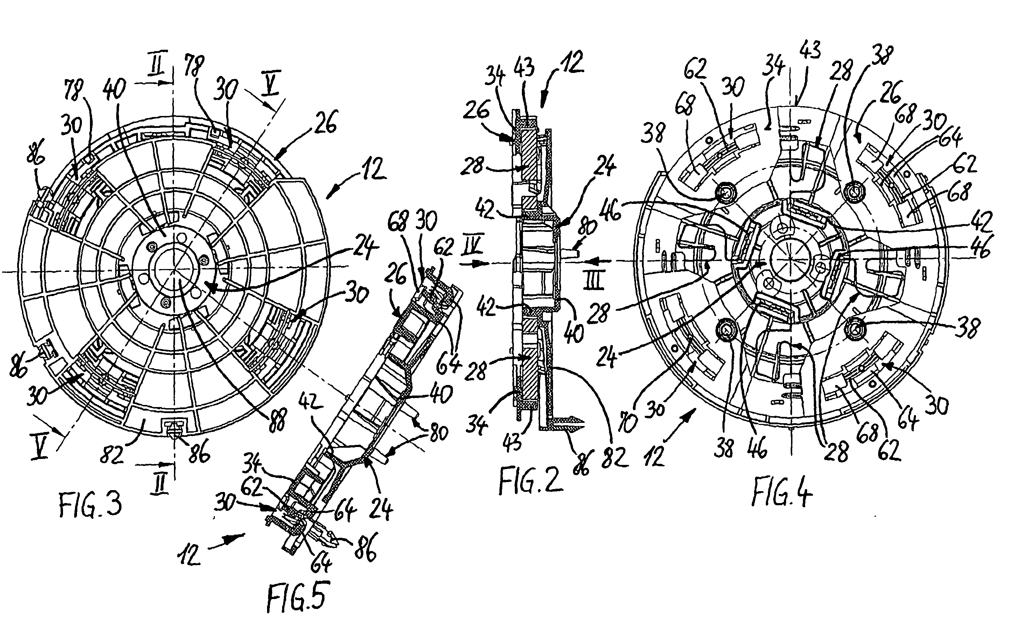

Das Trägerelement 12 ist - wie bereits erwähnt - axial zwischen dem Trägerteil 6 und dem Elektromotor 2 angeordnet. Dabei ist einerseits der Träger-Halteabschnitt 26 auf seiner von dem Elektromotor 2 axial abgekehrten Seite mit dem Trägerteil 6 verbunden, insbesondere flächig auf der Gehäusewandung 8 befestigt. Andererseits ist der Motor-Halteabschnitt 24 auf seiner von dem Trägerteil 6 axial abgekehrten Seite mit dem Elektromotor 2 verbunden, und zwar mit einem Stirnisolationsschaft 32 verschraubt. Der Träger-Halteabschnitt 26 weist eine äußere, im wesentlichen ringscheibenförmige Wandung 34 auf, die auf einer Montagefläche 36 des Trägerteils 6 bzw. der Gehäusewandung 8 flächig befestigbar ist. Die Befestigung erfolgt über in den Zeichnungen nicht dargestellte Schrauben, die von der Innenseite des Lüfters 10 her durch entsprechende Öffnungen der Gehäusewandung 8 hindurch in Schraublöcher 38 des Träger-Halteabschnittes 26 eingreifen. Der Motor-Halteabschnitt 24 besitzt eine innere, ebenfalls im wesentlichen ringscheibenförmige, zentrisch an dem Elektromotor 2 bzw. an dem Stirnisolationsschaft 32 befestigbare Wandung 40. Diese beiden Wandungen 34 und 40 der beiden Halteabschnitte 24,26 sind gemäß Fig. 1 und 2 mit einem bestimmten Abstand axial versetzt, so daß das Trägerelement 12 praktisch als Doppelscheibe ausgebildet ist. Die elastischen Verbindungsstücke 28 liegen axial im zwischen den Wandungen 34,40 gebildeten Zwischenraum. Die Halteabschnitte 24,26 weisen axiale Abschnitte 42 bzw. 43 auf, die jeweils axial entgegengesetzt ineinandergreifen und einander hierdurch in radialer Richtung überlappen, so daß die Verbindungsstücke 28 in im wesentlichen radialer Richtung sich jeweils zwischen dem inneren Abschnitt 42 und dem äußeren Abschnitt 43 erstrecken. Auf diese Weise bilden die beiden Halteabschnitte 24,26 praktisch ein Aufnahmegehäuse für die Verbindungsstücke 28.

Die beiden Halteabschnitte 24,26 und die elastischen Verbindungsstücke 28 sind von ursprünglich separaten Einzelteilen gebildet. Die Halteabschnitte 24,26 und die Verbindungsstücke 28 sind aus verschiedenen Materialien hergestellt. Die Halteabschnitte 24,26 bestehen aus einem geeigneten Kunststoffmaterial, während die Verbindungsstücke 28 aus Metall, und zwar aus Federstahlblech, bestehen. Dabei werden die Verbindungsstücke 28 mit ihren inneren und äußeren Enden jeweils über kraft- und/oder formschlüssige Verbindungen mit den beiden Halteabschnitten 24,26 verbunden (grundsätzlich lösbar). Allerdings sind durchaus auch andere Verbindungsarten möglich, beispielsweise eine stoffschlüssige Verbindung durch Einformen in das Kunststoffmaterial (unlösbar).

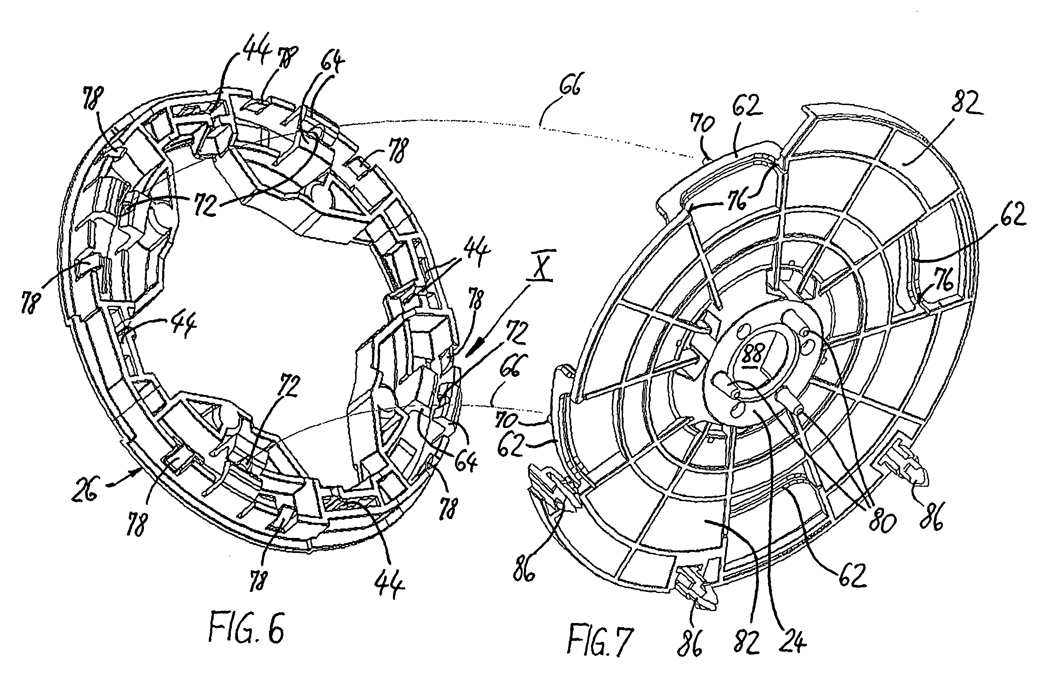

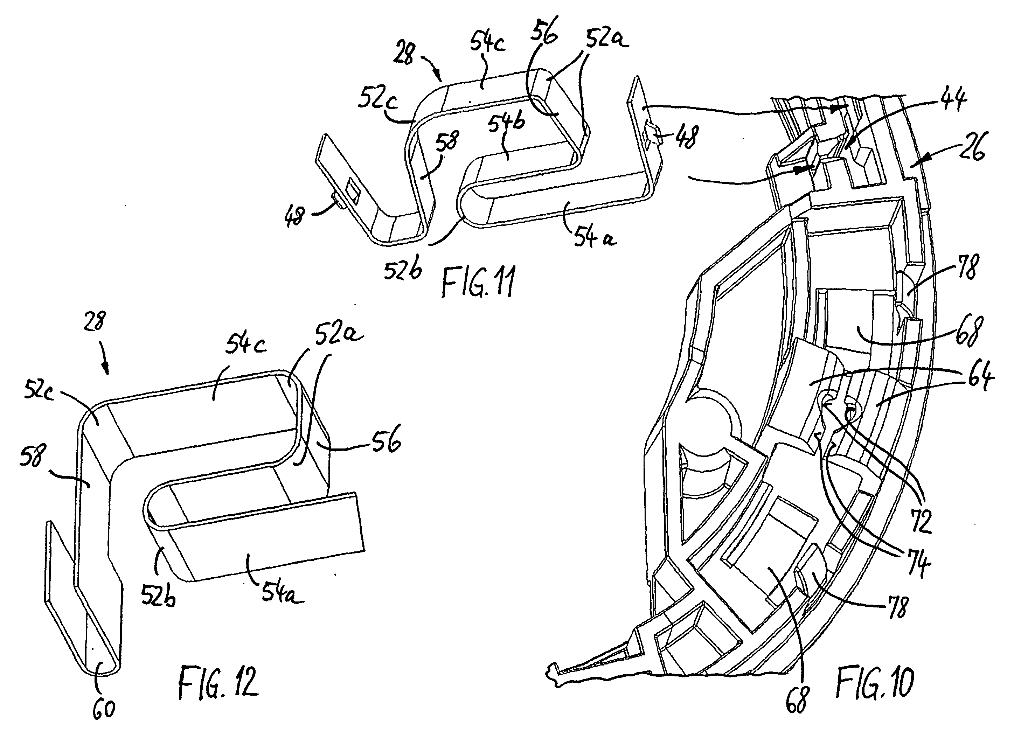

Wie sich nun aus Fig. 10 und 11 ergibt, wird bevorzugt jedes Verbindungsstück 28 mit seinem radial äußeren Endbereich kraft- und/oder formschlüssig in eine Halteaufnahme 44 des Träger-Halteabschnittes 26 eingesetzt. Diese Halteaufnahmen 44 sind auch in Fig. 6 gut zu erkennen. Gemäß Fig. 4 sitzen die Verbindungsstücke 28 mit ihren radial inneren Endbereichen jeweils in einer Halteaufnahme 46 des Motor-Halteabschnittes 24. Hierzu wird auch auf Fig. 9 und 13 verwiesen. Um eine formschlüssige oder zumindest kraftformschlüssige Halterung der Verbindungsstücke 28 in den Halteaufnahmen 44,46 zu erreichen, weist gemäß Fig. 11 jedes Verbindungsstück 28 in seinen freien, in die Aufnahmen steckbaren Endbereichen widerhakenartig herausgebogene Haltezungen 48 auf.

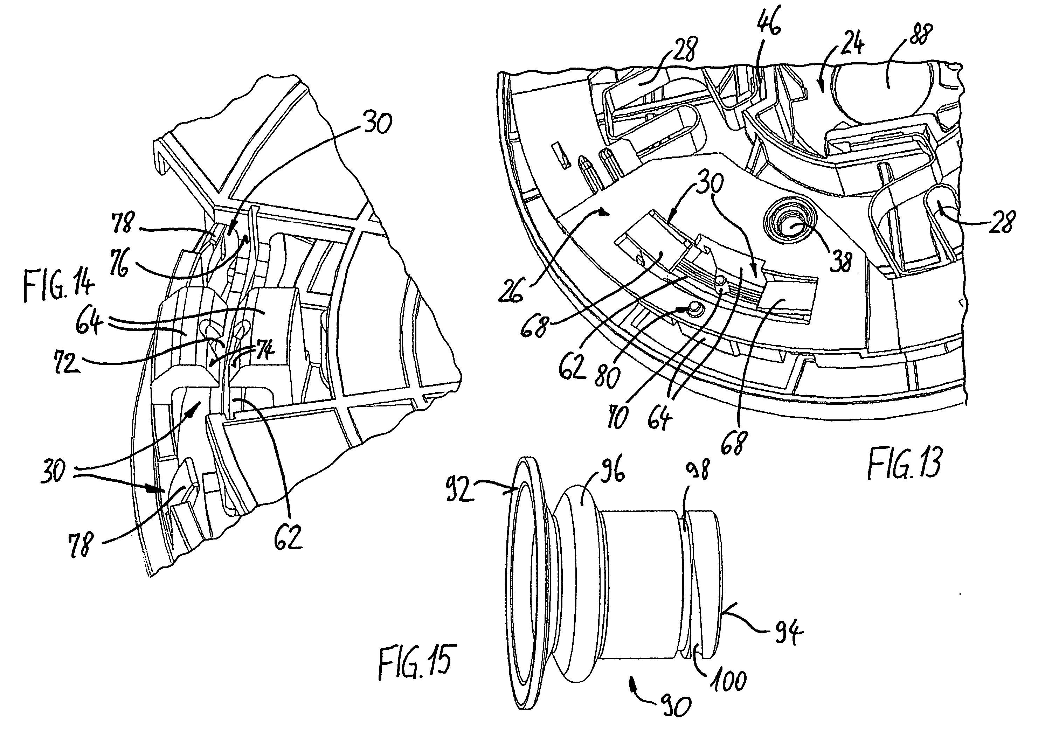

Wie sich ferner aus Fig. 11 bzw. 12 ergibt, besteht jedes Verbindungsstück 28 aus einem elastischen Streifenmaterial, das bezüglich seiner über die Streifenbreite verlaufenden Querachse parallel zur Motorachse (Motorwelle 20) ausgerichtet ist. Dabei weist jedes Verbindungsstück 28 zwischen seinen radial äußeren und inneren Endbereichen - die insbesondere jeweils in radialer Richtung etwa auf dem gleichen Radius gegenüberliegend angeordnet sind - einen verlängerten, die elastische Beweglichkeit bzw. Verformbarkeit und damit die Relativbeweglichkeit der Halteabschnitte 24,26 erhöhenden Verlauf auf. Zweckmäßigerweise handelt es sich bei jedem Verbindungsstück 28 um einen zwischen seinen Endbereichen etwa S-förmigen Verlauf mit drei etwa radial ausgerichteten, über Biegungen 52a, 52b verbundenen Abschnitten 54a, b, c. Bei den konkreten Ausführungsbeispielen nach Fig. 11 und 12 geht ein erster etwa radialer Abschnitt 54a über eine etwa 180°-Biegung 52b in einen zweiten radialen Abschnitt 54b über. Dieser zweite radiale Abschnitt 54b geht zunächst über eine erste etwa 90°-Biegung 52a in einen etwa tangential angeordneten Übergangsabschnitt 56 über, und an diesen Übergangsabschnitt 56 schließt sich über eine weitere 90°-Biegung 52a ein dritter etwa radialer Abschnitt 54c an. Dieser geht schließlich über eine Biegung 52c in einen radial inneren, etwa tangentialen Abschnitt 58 derart über, daß hierdurch die beiden an den Halteabschnitten 24, 26 zu befestigenden Endbereiche einander im wesentlichen radial gegenüberliegen. Im Falle der Ausführung nach Fig. 12 schließt sich im radial inneren Endbereich noch eine weitere, in axialer Richtung verlaufende 180°-Biegung 60 an. Diese Ausführungsform gewährleistet eine besonders effektive dreidimensionale Schwingungsisolation.

Was nun die oben bereits allgemein erwähnten, Anschlagmittel 30 betrifft, so werden diese zumindest teilweise von derart elastisch verformbaren Elementen der Halteabschnitte 24,26 gebildet, daß relativbewegungsbedingte Anschläge elastisch abgefangen bzw. abgebremst (gedämpft) werden.

Wie sich am besten aus Fig. 13 und 14 ergibt, greifen die Halteabschnitte 24,26 im Bereich der Anschlagmittel 30 jeweils radial und axial mit entsprechendem Bewegungsspielraum ineinander. Der Motor-Halteabschnitt 24 ist einstückig mit mehreren (mindestens zwei) über den Umfang verteilt angeordneten und in Umfangsrichtung insbesondere konzentrisch kreisbogenförmig verlaufenden Anschlagstegen 62 verbunden, die jeweils von mindestens zwei klauenartigen Anschlagstücken 64 des Träger-Halteabschnittes 26 axial und radial umgriffen werden (s. insbesondere Fig. 14 sowie auch Fig. 5). Hierbei sind die einander jeweils paarweise in radialer Richtung gegenüberliegenden Anschlagstücke 64 in radialer Richtung derart elastisch verformbar ausgebildet, daß bei einem axialen Zusammenfügen der beiden Halteabschnitte 24, 26 (vgl. die zwischen Fig. 6 und 7 verlaufenden Linien 66) die Anschlagstege 62 jeweils radial zwischen die beiden paarweise zugehörigen Anschlagstücke 64 einrastbar sind. Dazu besitzen die Anschlagstücke 64 zweckmäßigerweise entsprechende Einführschrägflächen 74 für die Anschlagstege 62. Die klauenartigen Anschlagstücke 64 gewährleisten somit im Zusammenwirken mit den Anschlagstegen 62 zunächst einen Anschlag in einer axialen Richtung, und zwar in der vom Lüfter 10 wegweisenden Bewegungsrichtung des Elektromotors 2. Gemäß Fig. 13 weist der Träger-Halteabschnitt 26 auf seiner den klauenartigen Anschlagstücken 64 axial gegenüberliegenden Seite Anschlagelemente 68 auf, die als elastische Zungen ausgebildet sind, die jeweils im Zusammenwirken mit den Anschlagstegen 62 einen elastischen Anschlag in der anderen axialen Richtung gewährleisten, und zwar in der Bewegungsrichtung des Elektromotors 2 in Richtung des Lüfters 10.

Die klauenartigen Anschlagstücke 64 und die Anschlagstege 62 wirken beim Zusammenfügen der beiden Halteabschnitte 24, 26 über Positionierund Einführmittel zusammen. Wie dargestellt, haben die Anschlagstege 62 jeweils einen axialen Positionieransatz 70, der in einer fügerichtigen Position in eine entsprechende, zwischen den beiden radial gegenüberliegenden Anschlagstücken 64 gebildete Erweiterung 72 eingreift. Wie bereits erwähnt besitzen die Anschlagstücke 64 hierbei Einführschrägflächen 74 (Fig.10 und 14) derart, daß beim Einführen der Anschlagstege 62 zwischen die Anschlagstücke 64 letztere selbsttätig radial gespreizt werden, bis sie nachfolgend hinter dem jeweiligen Anschlagsteg 62 zurückfedern und dann den Steg radial und axial hintergreifen.

Wie sich weiterhin aus Fig. 14 ergibt, wirken die Anschlagstücke 64 im Falle von tangentialen Relativbewegungen, d.h. gegenseitigen Verdrehungen, mit in den in Umfangsrichtung weisenden Endbereichen der Anschlagstege 62 gebildeten Anschlagflächen 76 zusammen.

Was nun radiale Relativbewegungen der beiden Halteabschnitte 24,26 betrifft, so wirkt jeweils mindestens einer der Anschlagstege 62 mit mindestens einem radial gegenüberliegenden, insbesondere elastisch verformbaren, zungenartigen Anschlagelement 78 zusammen. Jedem Anschlagsteg 62 sind zwei etwa in seinen Endbereichen angeordnete Anschlagelemente 78 zugeordnet. Hierzu wird wiederum vor allem auf Fig. 14 verwiesen.

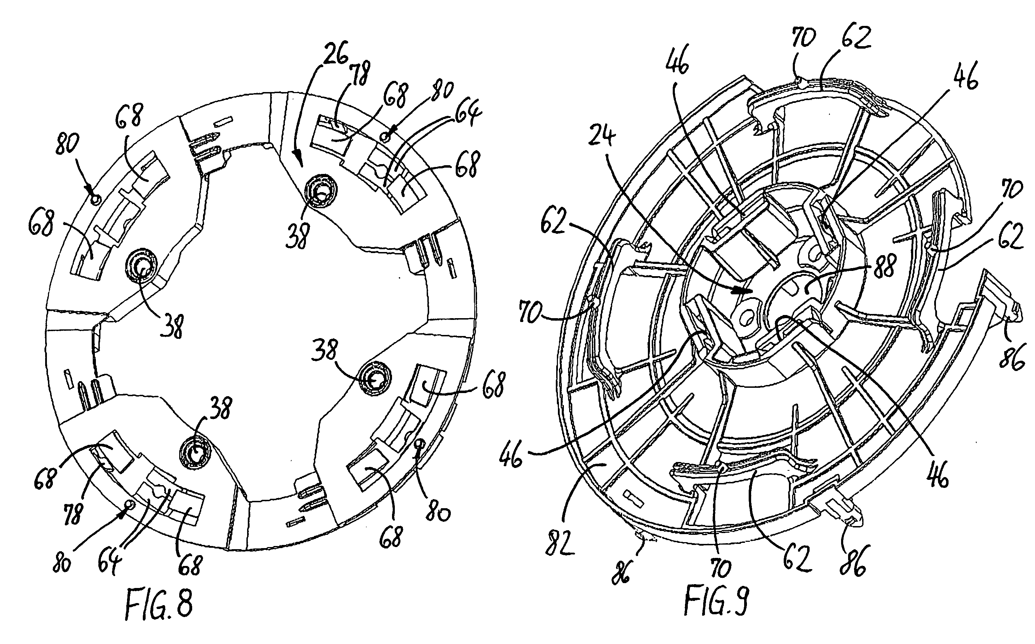

Zur lagerichtigen Verbindung mit dem Elektromotor 2 und/oder mit dem Trägerteil 6 weist das Trägerelement 12 zweckmäßigerweise Positioniermittel 80 auf. Wie sich beispielsweise aus Fig. 8 und 13 ergibt, handelt es sich einerseits um axiale, kurze stiftförmige Positionieransätze des Träger-Halteabschnittes 26, die in entsprechende Öffnungen des Trägerteils 6 bzw. der Gehäusewandung 8 zur lagerichtigen Ausrichtung eingreifen. Andererseits weist auch der Motor-Halteabschnitt 24 - vgl. z.B. Fig. 2, 5 und 7 - stiftartige, axiale Ansätze auf, die in entsprechende Öffnungen des Motors 2 bzw. des Stirnisolationsschaftes 32 eingreifen.

Der Motor-Halteabschnitt 24 ist einstückig mit einer den Bereich der Verbindungsstücke 28 überdeckenden und so axial die Verbindungsstücke 28 gegen spannungsführende Teile des Elektromotors 2 abschirmenden Deckwandung 82 verbunden. Wie dargestellt, sind die Anschlagstege 62 an diese Deckwandung 82 angeformt. Die mit dem Motor-Halteabschnitt 24 einstückig geformte Deckwandung 82 ist vor allem bei Verbindungsstücken 28 als metallischen- und daher elektrisch leitfähigen - Federelementen wichtig. Denn hierdurch würde sich zwischen den metallischen Teilen des Lüfters 10 und axial gegenüberliegenden, spannungsführenden Teilen des Motors 2 eventuell eine Luft-Kriechstrecke ausbilden können. Es wird jedoch durch die Deckwandung 82 eine Luft-Kriechstrecken-Isolation zwischen den Verbindungsstücken 28 und dem Elektromotor 2 gewährleistet. An der Deckwandung 82 etwa parallel zu dieser ist eine Leiterplatte 84 befestigt (s. Fig. 1), wobei diese Leiterplatte 84 eine Ansteuerschaltung für den Motor 2 trägt und axial zwischen dem Stator 14 und Trägerelement 12 angeordnet ist. Zweckmäßigerweise besitzt die Deckwandung 82 axiale, in Öffnungen der Leiterplatte 84 zur Halterung eingreifende Rastansätze 86. Die Deckwandung 82 ist bezüglich ihrer Flächenform und -größe so an die Leiterplatte 84 angepaßt, daß sie zumindest alle spannungsführenden Bereiche der Leiterplatte 84 in Richtung der Verbindungsstücke 28 abschirmt.

Es sei noch erwähnt, daß das Trägerelement 12 eine zentrische Durchführöffnung 88 für die Motorwelle 20 aufweist. Zweckmäßigerweise ist in diesem Bereich der Durchführöffnung 88 eine spezielle Wellendichtung 90 gehaltert, die im wesentlichen als schlauch- bzw. faltenbalgartiger Hohlkörper ausgebildet ist und mit einem ersten stirnseitigen Dichtrand 92 axial an dem Trägerteil 6 sowie mit einem zweiten stirnseitigen Dichtrand 94 axial an dem Elektromotor 2 anliegt. Hierbei umschließt die Wellendichtung 90 die Motorwelle 20 koaxial. Gemäß Fig. 1 besteht sie aus einem dem Motor 2 zugekehrten zylindrischen Abschnitt, der in einen in Richtung des Lüfters 10 etwa glockenartig erweiterten Abschnitt übergeht. In der in Fig. 15 veranschaulichten Ausführungsform der Wellendichtung 90 weist diese zwischen dem zylindrischen Abschnitt und dem sich glockenartig erweiternden Abschnitt einen Faltenabschnitt 96 auf, wodurch sich die axiale Elastizität erhöht. Die Wellendichtung 90 wird unmittelbar innerhalb der Durchführöffnung 88 des Motor-Halteabschnittes 24 gehaltert, wozu sie eine umlaufende Ringnut 98 aufweist, in die der Öffnungsrand der Durchführöffnung 88 eingreift. Gemäß Fig. 15 kann zur leichteren Montage eine vom zweiten Dichtrand 94 ausgehende, schraubenlinienförmig verlaufende und in die Ringnut 98 übergehende Einführrille 100 vorgesehen sein. Die Wellendichtung 90 besteht aus einem gummielastischen sowie vorzugsweise auch elektrisch leitfähigen Material, wodurch sie vorteilhafterweise auch einen Potentialausgleich zwischen Gebläse 10 und Motor 2 gewährleistet. Die Wellendichtung 90 sitzt gemäß Fig. 1 ortsfest, d.h. nicht rotierend, zwischen der Gehäusewandung 8 und einem statorseitigen Lagerring.

Es sei noch erwähnt, daß die beiden Halteabschnitte 24 und 26 über vier gleichmäßig über den Umfang verteilt angeordnete und somit jeweils um 90° in Umfangsrichtung beabstandete Verbindungsstücke 28 verbunden sind. Die Anschlagmittel 30 sind zweckmäßigerweise jeweils in den in Umfangsrichtung zwischen den Verbindungsstücken 28 liegenden Winkelbereichen angeordnet, so daß ebenfalls bevorzugt eine vierfache Anordnung der Anschlagmittel 30 vorgesehen ist (s. insbesondere Fig. 4).

Was nun die Montage betrifft, so wird zunächst das Trägerelement 12 komplett montiert. Es wird dann über drei Schrauben mit dem Elektromotor 2 verschraubt, wobei die Positioniermittel 80 in entsprechende Öffnungen am Stirnisolationsschaft des Motors eingreifen. Anschließend wird die dem Motor 2 zugewandte Gehäusewandung 8 des Lüfters 10 auf den Träger-Halteabschnitt 26 aufgesetzt und mittels nicht dargestellter Schrauben verschraubt. Die Befestigung erfolgt somit von der Innenseite des Gebläses 10 her. Gemäß Fig. 1 kann der Elektromotor 2 auf seiner von dem Lüfter 10 abgekehrten Seite von einem Abdeckteil 102 abgedeckt werden, wobei dieses Abdeckteil über eine an sich beliebige Halterung 104 insbesondere direkt am Lüftergehäuse befestigt wird.

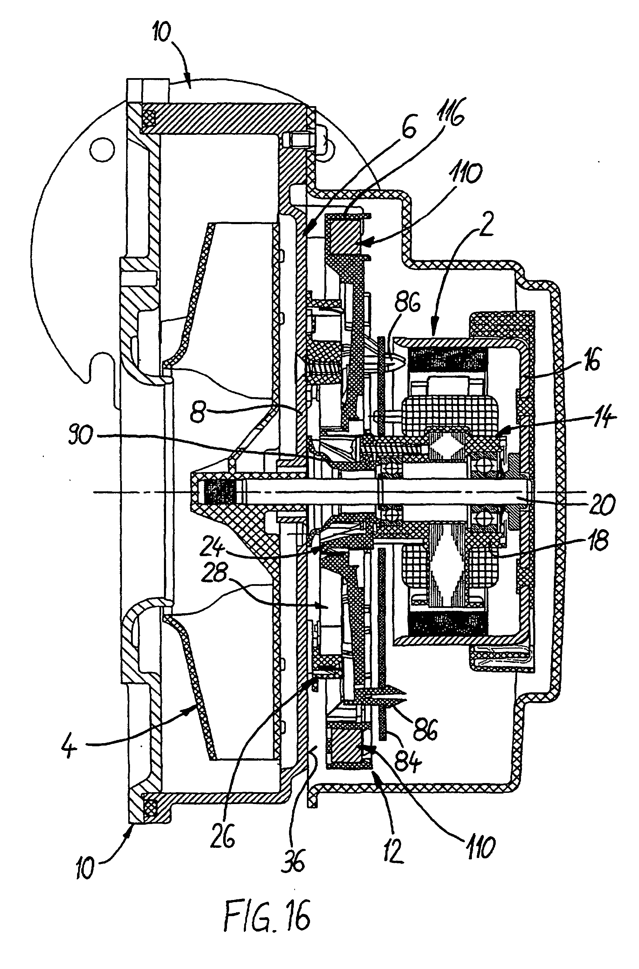

Anhand der Fig. 16 bis 18 soll nun eine vorteilhafte Ausgestaltung der Erfindung erläutert werden. Dieser Ausführungsform liegt folgende Problematik zugrunde.

Beim Einsatz von Gleichstrommotoren werden zwangsläufig kommutierungsangeregte Schwingungen erzeugt. Außerdem kommen Anregungen durch Rest-Unwuchten hinzu, die ebenfalls durch die Schwingungsisolation isoliert werden müssen. Dabei hat sich gezeigt, daß bei der Auslegung der Schwingungsisolation nicht nur die statischen Eigenfrequenzen zu berücksichtigen sind, sondern zusätzlich auch die dynamischen Eigenfrequenzen, die durch Nutationsschwingungen des Kreiselsystems, im vorliegenden Anwendungsfall des sich drehenden Rotors, bestimmt werden. Der bevorzugten Ausführungsform nach Fig. 16 bis 18 liegt nun die Erkenntnis zugrunde, daß die Auswirkungen der auftretenden dynamischen Eigenfrequenzen im in Betracht zu ziehenden Drehzahlbereich allein durch Reduzierung der Unwucht des sich drehenden Systems nur unzureichend reduziert werden können.

Deshalb ist vorgesehen, die Masse der schwingenden, jedoch nicht rotierenden Teile bewußt zu erhöhen. Dies wird durch (mindestens) eine zur Beeinflussung des Schwingungsverhaltens (Resonanz) motorseitig befestigte bzw. befestigbare Zusatzmasse 110 erreicht. Diese Zusatzmasse 110, die nur in Fig. 16 im Schnitt erkennbar ist, ist insbesondere an dem Motor-Halteabschnitt 24 des Trägerelementes 12 befestigt bzw. befestigbar.

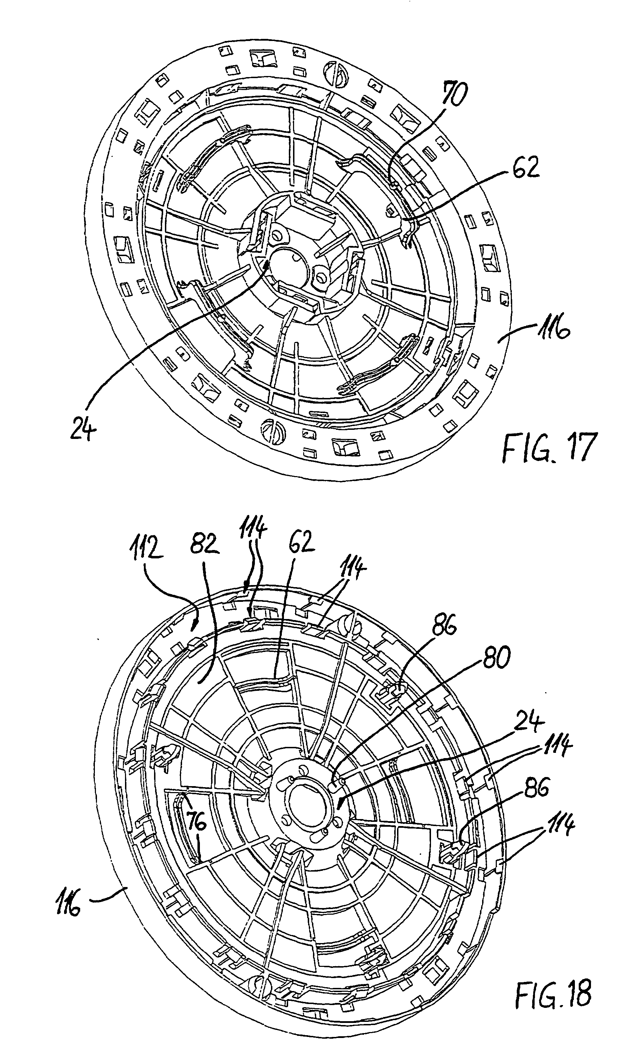

Wie sich aus Fig. 17 und 18 ergibt, weist hierzu der Motorhalteabschnitt 24 in seinem äußeren Umfangsbereich eine ringförmige, zur Motorwelle 20 koaxiale Aufnahmekammer 112 auf, in die die Zusatzmasse 110 lösbar über Rastmittel 114 eingesetzt bzw. einsetzbar ist. Die Aufnahmekammer 112 wird durch einen im Axialschnitt gesehen U-förmigen, in einer Axialrichtung offenen Ringabschnitt 116 gebildet, der einstückig mit dem Motor-Halteabschnitt 24 verbunden ist. Hierbei ist die Zusatzmasse 110 entsprechend ringförmig ausgebildet; beispielsweise in Form einer dicken, kreisringförmigen Stahlscheibe. Die ringförmige Zusatzmasse 110 kann in Umfangsrichtung einstückig ausgeführt sein. In der dargestellten, Figur besteht die Zusatzmasse 110 jedoch aus (mindestens) zwei einzelnen Segmenten bzw. Sektoren, die demzufolge jeweils etwa halbkreisförmig ausgebildet sind. Die Rastmittel 114 bestehen jeweils aus einem Paar von radial gegenüberliegenden Rastnasen, zwischen die die Zusatzmasse 110 eingeklipst werden kann. Die Paare der Rastnasen sind hierbei gleichmäßig über den Umfang verteilt angeordnet, so daß eine sichere Halterung der Zusatzmasse 110 erreicht wird. Alternativ zu den bevorzugten Rastmitteln 114 sind auch andere Befestigungsarten denkbar, wie beispielsweise Umspritzen (Einformen in das Kunststoffmaterial) oder Kleben.

Ferner ist es möglich, die Zusatzmasse 110 in axialer Richtung aus mehreren dünneren Scheiben bzw. Scheibenteilen zu bilden.

Die Zusatzmasse dient der Vrschiebung des Schwerpunktes des Systems, vorteilhafterweise in Richtung Motorwelle, was sich auf die schwingungsisolierenden Eigenschaften des Systems günstig auswirkt.

## Patentansprüche

1. Anordnung zur schwingungsisolierenden Halterung eines Elektromotors (2) an einem Trägerteil (6) über ein im wesentlichen scheibenförmiges Trägerelement (12), wobei das Trägerelement (12) zwei Halteabschnitte (24, 26), und zwar einen Motor-Halteabschnitt (24) zum Verbinden mit dem Elektromotor (2) und einen Träger-Halteabschnitt (26) zum Verbinden mit dem Trägerteil (6) aufweist, und wobei die beiden Halteabschnitte (24, 26) über elastische, stegartige Verbindungsstücke (28) verbunden sind,
**dadurch gekennzeichnet, dass** die beiden Halteabschnitte (24, 26) und die Verbindungsstücke (28) von ursprünglich separaten Einzelteilen gebildet sind, wobei die Verbindungsstücke (28) über kraft- und/oder formschlüssige Verbindungen einerseits im radial äußeren Bereich mit dem einen Halteabschnitt (26) sowie andererseits im radial inneren Bereich mit dem anderen Halteabschnitt (24) verbunden sind und wobei die Verbindungsstücke (28) derart ausgelegt sind, dass die beiden Halteabschnitte (24, 26) dreidimensional, in allen Raumrichtungen, und zwar axial, radial und tangential, über einen bestimmten Bewegungsspielraum hinweg relativ zueinander elastisch beweglich sind, wobei das Trägerelement (12) integrierte Anschlagmittel (30) zur dreidimensionalen Begrenzung der elastischen Relativbewegungen der Halteabschnitte (24, 26) aufweist.

2. Anordnung nach Anspruch 1,
**dadurch gekennzeichnet, dass** die Verbindungsstücke (28) im radial äußeren Bereich mit dem Träger-Halteabschnitt (26) und im radial inneren Bereich mit dem Motor-Halteabschnitt (24) verbunden sind.

3. Anordnung nach Anspruch 1 oder 2,
**dadurch gekennzeichnet, dass** die Halteabschnitte (24,26) und die Verbindungsstücke (28) aus verschiedenen Materialien bestehen, wobei vorzugsweise die Halteabschnitte (24, 26) aus einem ersten Kunststoff und die Verbindungsstücke (28) aus einem zweiten Kunststoff oder aus Metall, insbesondere aus einem Federstahlblech, bestehen.

4. Anordnung nach einem der Ansprüche 1 bis 3,
**dadurch gekennzeichnet, dass** jedes Verbindungsstück (28) mit seinem radial äußeren Endbereich in einer Halteaufnahme (44) des Träger-Halteabschnittes (26) und mit seinem radial inneren Endbereich in einer Halteaufnahme (46) des Motor-Halteabschnittes (24) sitzt.

5. Anordnung nach einem der Ansprüche 1 bis 4,
**dadurch gekennzeichnet, dass** jedes Verbindungsstück (28) aus einem elastischen Streifenmaterial besteht, das bezüglich seiner über die Streifenbreite verlaufenden Querachse parallel zur Motorachse (20) ausgerichtet ist.

6. Anordnung nach einem der Ansprüche 1 bis 5,
**dadurch gekennzeichnet, daß** jedes Verbindungsstück (28) zwischen seinen radial äußeren und inneren, insbesondere jeweils in radialer Richtung etwa auf dem gleichen Radius gegenüberliegenden Endbereichen einen verlängerten, die elastische Beweglichkeit erhöhenden Verlauf aufweist, wozu vorzugsweise jedes Verbindungsstück (28) zwischen seinen Endbereichen einen etwa S-förmigen Verlauf mit drei etwa radial ausgerichteten, über Biegungen (52) verbundenen Abschnitten (54) aufweist.

7. Anordnung nach einem der Ansprüche 1 bis 6
**dadurch gekennzeichnet, daß** die Anschlagmittel (30) zumindest teilweise von derart elastisch verformbaren Elementen der Halteabschnitte (24,26) gebildet sind, daß Relativbewegungen elastisch gedämpft werden.

8. Anordnung nach einem der Ansprüche 1 bis 7,
**dadurch gekennzeichnet, daß** die Halteabschnitte (24,26) im Bereich der Anschlagmittel (30) radial und/oder axial mit entsprechendem Bewegungsspielraum ineinandergreifen.

9. Anordnung nach einem der Ansprüche 1 bis 8,
**dadurch gekennzeichnet, daß** der eine Halteabschnitt (24) mehrere über den Umfang verteilt angeordnete und in Umfangsrichtung insbesondere kreisbogenförmig verlaufende Anschlagstege (62) aufweist, die jeweils von mindestens zwei klauenartigen Anschlagstücken (64) des anderen Halteabschnittes (26) axial und radial umgriffen werden, wobei vorzugsweise die Anschlagstücke (64) in radialer Richtung derart elastisch ausgebildet sind, daß bei einem axialen Zusammenfügen der beiden Halteabschnitte (24,26) die Anschlagstege (62) jeweils radial zwischen die beiden zugehörigen Anschlagstücke (64) einrastbar sind.

10. Anordnung nach Anspruch 9,
**dadurch gekennzeichnet, daß** die klauenartigen Anschlagstücke (64) im Zusammenwirken mit den Anschlagstegen (62) einen Anschlag in einer axialen Richtung gewährleisten.

11. Anordnung nach Anspruch 9 oder 10,
**dadurch gekennzeichnet, daß** der die Anschlagstücke (64) aufweisende Halteabschnitt (26) auf der axial gegenüberliegenden Seite insbesondere axial elastisch verformbare Anschlagelemente (68) aufweist, die jeweils im Zusammenwirken mit den Anschlagstegen (62) einen insbesondere elastischen Anschlag in der anderen axialen Richtung gewährleisten.

12. Anordnung nach einem der Ansprüche 9 bis 11,
**dadurch gekennzeichnet, daß** im Falle von tangentialen Relativbewegungen, d.h. gegenseitigen Verdrehungen der beiden Halteabschnitte (24, 26), die Anschlagstücke (64) mit in den Endbereichen der Anschlagstege (62) gebildeten Anschlagflächen (76) zusammenwirken.

13. Anordnung nach einem der Ansprüche 9 bis 12,
**dadurch gekennzeichnet, daß** im Falle von radialen Relativbewegungen der beiden Halteabschnitte (24,26) jeweils mindestens einer der Anschlagstege (62) mit mindestens einem radial gegenüberliegenden, insbesondere elastisch verformbaren Anschlagelement (78) des anderen Halteabschnittes (26) zusammenwirkt.

14. Anordnung nach einem der Ansprüche 1 bis 13,
**dadurch gekennzeichnet, daß** der Motor-Halteabschnitt (24) eine den Bereich der verbindungsstücke (28) überdeckende und so axial von dem Elektromotor (2) trennende Deckwandung (82) aufweist.

15. Anordnung nach einem der Ansprüche 1 bis 14,
**dadurch gekennzeichnet, daß** axial zwischen dem Elektromotor (2) und dem Trägerelement (12) eine Leiterplatte (84) angeordnet ist, die insbesondere an der Deckwandung (82) gehaltert ist, indem vorzugsweise die Deckwandung (82) axiale, in die Leiterplatte (84) eingreifende Rastansätze (86) aufweist.

16. Anordnung nach einem der Ansprüche 1 bis 15,
**dadurch gekennzeichnet, daß** das Trägerelement (12) eine zentrische Durchführöffnung (88) für eine Motorwelle (20) aufweist, wobei vorzugsweise eine an dem Trägerelement (12) gehalterte, im wesentlichen als schlauchartiger, die Welle (29) umschließender Hohlkörper ausgebildete Wellendichtung (90) vorgesehen ist, die mit einem ersten, stirnseitigen Dichtrand (92) axial an dem Trägerteil (6) sowie mit einem zweiten stirnseitigen Dichtrand (94) axial an dem Elektromotor (2) anliegt, und wobei die Wellendichtung (90) aus einem gummielastischen und vorzugsweise elektrisch leitfähigen Material besteht.

17. Anordnung nach einem der Ansprüche 1 bis 16
**gekennzeichnet durch** eine zur Beeinflussung des Schwingungsverhaltens motorseitig befestigte bzw. befestigbare Zusatzmasse (110).

18. Anordnung nach Anspruch 17,
**dadurch gekennzeichnet, dass** die Zusatzmasse (110) an dem Trägerelement (12), und zwar insbesondere an dem Motor-Halteabschnitt (24) befestigt bzw. befestigbar ist.

19. Anordnung nach Anspruch 17 oder 18,
**dadurch gekennzeichnet, dass** der Motor-Halteabschnitt (24) in seinem äußeren Umfangsbereich eine ringförmige, zur Motorwelle (20) koaxiale Aufnahmekammer (112) aufweist, in die die Zusatzmasse (110) insbesondere lösbar über Rastmittel (114) eingesetzt bzw. einsetzbar ist.

20. Anordnung nach einem der Ansprüche 17 bis 19,
**dadurch gekennzeichnet, dass** die im Wesentlichen ringförmige Zusatzmasse (110) aus mindestens zwei Segmenten besteht.

## Claims

1. Arrangement for the vibration-isolating mounting of an electric motor (2) on a support part (6) via an essentially disc-shaped support element (12), the support element (12) having two holding sections (24, 26) specifically a motor-holding section (24) for connection to the electric motor (2) and a support-holding section (26) for connection to the support part (6), and the two holding sections (24, 26) being connected via elastic, web-like connecting pieces (28), **characterized in that** the two holding sections (24, 26) and the connecting pieces (28) are formed by originally separate component parts, the connecting pieces (28) being connected via non-positive and/or positive-locking connections in the radially outer region to one holding section (26), on the one hand, and in the radially inner region to the other holding section (24), on the other hand, and the connecting pieces (28) being designed such that the two holding sections (24, 26) are elastically movable relative to each other three-dimensionally in all directions in space, specifically axially, radially and tangentially, over a certain movement play, the support element (12) having integrated stop means (30) for the three-dimensional limiting of the elastic relative movements of the holding sections (24, 26).

2. Arrangement according to Claim 1, **characterized in that** the connecting pieces (28) are connected in the radially outer region to the support-holding section (26) and in the radially inner region to the motor-holding section (24).

3. Arrangement according to Claim 1 or 2, **characterized in that** the holding sections (24, 26) and the connecting pieces (28) consist of different materials, the holding sections (24, 26) preferably consisting of a first plastic and the connecting pieces (28) consisting of a second plastic or of metal, in particular a spring steel plate.

4. Arrangement according to one of Claims 1 to 3, **characterized in that** each connecting piece (28) is seated, by its radially outer end region, in a holding receptacle (44) of the support-holding section (26) and, by its radially inner end region, in a holding receptacle (46) of the motor-holding section (24).

5. Arrangement according to one of Claims 1 to 4, **characterized in that** each connecting piece (28) consists of an elastic strip material which, with respect to its transverse axis running over the width of the strip, is aligned parallel to the motor axis (20).

6. Arrangement according to one of Claims 1 to 5, **characterized in that** each connecting piece (28) has, between its radially outer and inner end regions which in particular in each case lie opposite each other in the radial direction approximately on the same radius, an extended profile which increases the elastic movability, for which purpose each connecting piece (28) preferably has, between its end regions, an approximately S-shaped profile having three sections (54) which are aligned approximately radially and are connected via bends (52).

7. Arrangement according to one of Claims 1 to 6, **characterized in that** the stop means (30) are at least partially formed by elements of the holding sections (24, 26), which elements are elastically deformable in such a manner that relative movements are elastically damped.

8. Arrangement according to one of Claims 1 to 7, **characterized in that**, in the region of the stop means (30), the holding sections (24, 26) interlock radially and/or axially with a corresponding movement play.

9. Arrangement according to one of Claims 1 to 8, **characterized in that** one holding section (24) has a plurality of stop webs (62) which are distributed over the circumference, run in particular in the shape of a circular arc in the circumferential direction and are in each case axially and radially engaged around by at least two claw-like stop pieces (64) of the other holding section (26), the stop pieces (64) preferably being of elastic design in the radial direction such that when the two holding sections (24, 26) are joined together axially, the stop webs (62) can in each case be latched radially between the two associated stop pieces (64).

10. Arrangement according to Claim 9, **characterized in that** the claw-like stop pieces (64) ensure, in interaction with the stop webs (62), a limiting stop in an axial direction.

11. Arrangement according to Claim 9 or 10, **characterized in that** the holding section (26) having the stop pieces (64) has, on the axially opposite side, stop elements (68) which are elastically deformable in particular axially and in each case ensure, in interaction with the stop webs (62), a limiting stop, which in particular is elastic, in the other axial direction.

12. Arrangement according to one of Claims 9 to 11, **characterized in that** in the case of tangential relative movement, i.e. mutual twisting of the two holding sections (24, 26), the stop pieces (64) interact with stop surfaces (76) formed in the end region of the stop webs (62).

13. Arrangement according to one of Claims 9 to 12, **characterized in that** in the case of radial relative movement of the two holding sections (24, 26) in each case at least one of the stop webs (62) interacts with at least one radially opposite and in particular elastically deformable stop element (78) of the other holding section (26).

14. Arrangement according to one of Claims 1 to 13, **characterized in that** the motor-holding section (24) has a covering wall (82) which covers the region of the connecting pieces (28) and thus axially separates them from the electric motor (2).

15. Arrangement according to one of Claims 1 to 14, **characterized in that** a printed circuit board (84) is arranged axially between the electric motor (2) and the support element (12), which printed circuit board is, in particular, mounted on the covering wall (82) by the covering wall (82) preferably having axial latching studs (86) which engage in the printed circuit board (84).

16. Arrangement according to one of Claims 1 to 15, **characterized in that** the support element (12) has a central lead-through opening (88) for a motor shaft (20), there preferably being provided a shaft seal (90) which is mounted on the support element (12), is essentially designed as a tubular hollow body which surrounds the shaft (29) and bears, with a first, end sealing edge (92), axially against the support part (6) and, with a second, end sealing edge (94), axially against the electric motor (2), and the shaft seal (90) consisting of a rubber-elastic and preferably electrically conductive material.

17. Arrangement according to one of claims 1 to 16, which **characterized by** an additional mass (110) which is fastened or can be fastened on the motor side to influence the vibration behaviour.

18. Arrangement according to Claim 17, **characterized in that** the additional mass (110) is fastened or can be fastened to the support element (12), to be precise, in particular to the motor-holding section (24).

19. Arrangement according to Claim 17 or 18, **characterized in that** the motor-holding section (24) has, in its outer circumferential region, an annular receiving chamber (112) which is coaxial with respect to the motor shaft (20) and into which the additional mass (110) is inserted or can be inserted, in particular releasably, via latching means (114).

20. Arrangement according to one of Claims 17 to 19, **characterized in that** the essentially annular additional mass (110) consists of at least two segments.

## Revendications

1. Dispositif pour fixer de manière à isoler des vibrations un moteur électrique (2) sur une pièce de support (6) par l'intermédiaire d'un élément de support (12) essentiellement en forme de disque, ledit élément de support (12) présentant deux segments de fixation (24, 26), à savoir un segment de fixation de moteur (24) pour la liaison avec le moteur électrique (2) et un segment de fixation de support (26) pour la liaison avec la pièce de support (6), et les deux segments de fixation (24, 26) étant reliés par l'intermédiaire de pièces de liaison élastiques, en forme de barrettes (28), **caractérisé en ce que** les deux segments de fixation (24, 26) et les pièces des liaison (28) sont formés par des pièces individuelles à l'origine séparées, les pièces de liaison (28) étant reliées par l'intermédiaire d'assemblages de manière solidaire par une liaison dynamique et/ou avec correspondance de forme avec un segment de fixation (26) dans la zone extérieure dans le sens radial, d'une part, ainsi qu'avec l'autre segment de fixation (24) dans la zone intérieure dans le sens radial, d'autre part, et les pièces de liaison (28) étant conçues de manière à ce que les deux segments de fixation (24, 26) soient mobiles de manière élastique relativement l'un à l'autre dans trois dimensions, dans toutes les directions de l'espace, à savoir, axiale, radiale et tangentielle au-delà d'un certain jeu de déplacement, l'élément de support (12) présentant des moyens de butée intégrés (30) pour limiter dans trois dimensions les déplacements relatifs élastiques des segments de fixation (24, 26).

2. Dispositif selon la revendication 1, **caractérisé en ce que** les pièces de liaison (28) sont reliées dans la zone extérieure dans le sens radial avec le segment de fixation du support (26) et dans la zone intérieure dans le sens radial avec le segment de fixation du moteur (24).

3. Dispositif selon la revendication 1 ou 2, **caractérisé en ce que** les segments de fixation (24, 26) et les pièces de liaison (28) sont réalisés dans des matériaux différents, les segments de fixation (24, 26) étant réalisés de préférence dans une première matière plastique et les pièces de liaison (28) étant réalisées dans une deuxième matière plastique ou en métal, en particulier dans une tôle d'acier à ressorts.

4. Dispositif selon l'une des revendications 1 à 3, **caractérisé en ce que** chaque pièce de liaison (28) est logée avec sa zone d'extrémité extérieure dans le sens radial dans un logement de fixation (44) du segment de fixation de support (26) et avec son extrémité intérieure dans le sens radial dans un logement de fixation (46) du segment de fixation de moteur (24).

5. Dispositif selon l'une des revendications 1 à 4, **caractérisé en ce que** chaque pièce de liaison (28) est réalisée dans une matière en forme de bande élastique qui est orientée parallèlement à l'axe du moteur (20) en ce qui concerne son axe transversal s'étendant sur la largeur de la bande.

6. Dispositif selon l'une des revendications 1 à 5, **caractérisé en ce que** chaque pièce de liaison (28) présente, entre ses zones d'extrémité extérieure et intérieure dans le sens radial, en particulier opposées dans la direction radiale à peu près sur le même rayon, un tracé prolongé augmentant la mobilité élastique, chaque pièce de liaison (28) présentant à cet effet de préférence, entre ses zones d'extrémité, un tracé à peu près en forme de S avec trois segments (54) orientés à peu près dans le sens radial, reliés par l'intermédiaire de courbures (52).

7. Dispositif selon l'une des revendications 1 à 6, **caractérisé en ce que** les moyens de butée (30) sont formés au moins en partie par des éléments déformables élastiquement des segments de fixation (24, 26), de manière à ce que les déplacements relatifs soient amortis.

8. Dispositif selon l'une des revendications 1 à 7, **caractérisé en ce que** les segments de fixation (24, 26), dans la zone des moyens de butée (30), sont engagés l'un dans l'autre dans le sens radial et/ou axial avec un jeu de déplacement correspondant.

9. Dispositif selon l'une des revendications 1 à 8, **caractérisé en ce que** l'un des segments de fixation (24) présente plusieurs nervures de butée (62) disposées de manière répartie sur la périphérie et s'étendant dans la direction circonférentielle, en particulier en forme d'arc de cercle, qui sont enveloppées dans les sens axial et radial chacune par au moins deux pièces de butée en forme de pattes (64) de l'autre segment de fixation (26), les pièces de butée (64) étant de préférence conçues élastiques dans la direction radiale de façon que, lors d'un assemblage des deux segments de fixation (24, 26) dans le sens axial, les nervures de butée (62) puissent s'engager dans le sens radial entre les deux pièces de butée associées (64).

10. Dispositif selon la revendication 9, **caractérisé en ce que** les pièces de butée en forme de pattes (64) assurent, en coopérant avec les nervures de butée (62), une butée dans une direction axiale.

11. Dispositif selon la revendication 9 ou 10, **caractérisé en ce que** le segment de fixation (26) comportant les pièces de butée (64) présente, du côté opposé dans le sens axial, en particulier des éléments de butée (68) déformables élastiquement dans le sens axial qui assurent une butée en particulier élastique dans l'autre direction axiale en coopérant avec les nervures de butée (62).

12. Dispositif selon l'une des revendications 9 à Il, **caractérisé en ce que**, dans le cas de déplacements relatifs tangentiels, c'est-à-dire de torsion en sens inverse des deux segments de fixation (24, 26), les pièces de butée (64) coopèrent avec des surfaces de butée (76) formées dans les zones d'extrémité des nervures de butée (62).

13. Dispositif selon l'une des revendications 9 à 12, **caractérisé en ce que**, dans le cas de déplacements relatifs radiaux des deux segments de fixation (24, 26), au moins une des nervures de butée (62) coopère avec au moins un élément de butée (78) opposé dans le sens radial, en particulier déformable élastiquement, de l'autre segment de fixation (26).

14. Dispositif selon l'une des revendications 1 à 13, **caractérisé en ce que** le segment de fixation du moteur (24) présente une paroi de recouvrement (82) recouvrant la zone des pièces de liaison (28) et séparant du moteur électrique (2) dans le sens axial.

15. Dispositif selon l'une des revendications 1 à 14, **caractérisé en ce qu'**une plaquette de circuits imprimés (84) est disposée dans le sens axial entre le moteur électrique (2) et l'élément de support (12) et est fixée en particulier sur la paroi de recouvrement (82), ladite paroi de recouvrement (82) présentant de préférence des saillies de blocage axiales (86), s'engageant dans la plaquette (84).

16. Dispositif selon l'une des revendications 1 à 15, **caractérisé en ce que** l'élément de support (12) présente une ouverture de traversée centrée (88) pour un arbre de moteur (20), un joint de l'arbre (90) maintenu sur l'élément de support (12) formé essentiellement comme un corps creux entourant l'arbre (20) à la manière d'un tuyau étant prévu de préférence, qui repose avec une premier bord d'étanchéité frontal (92) axialement sur la partie support (6) et avec un deuxième bord d'étanchéité frontal (94) axialement sur le moteur électrique (2), et le joint d'arbre (90) étant réalisé dans une matière élastique et de préférence électriquement conductrice.

17. Dispositif selon l'une des revendications 1 à 16, **caractérisé par** une masse supplémentaire (110) fixée ou pouvant être fixée côté moteur pour influer sur le comportement de vibration.

18. Dispositif selon la revendication 17, **caractérisé en ce que** la masse supplémentaire (110) est fixée ou peut être fixée sur l'élément de support (12), à savoir en particulier sur le segment de fixation du moteur (24).

19. Dispositif selon la revendication 17 ou 18, **caractérisé en ce que** le segment de fixation du moteur (24) présente, dans sa zone périphérique extérieure, une chambre de logement (112) annulaire, coaxiale à l'arbre de moteur (20), dans laquelle la masse supplémentaire (110) est insérée ou peut être insérée en particulier de manière séparable par l'intermédiaire de moyens de blocage (114).

20. Dispositif selon l'une des revendications 17 à 19, **caractérisé en ce que** la masse supplémentaire (110) est constituée d'au moins deux segments.
